# EUROPÄISCHE PATENTSCHRIFT

(11) **EP 4 399 371 B1**
(45) Veröffentlichungstag und Bekanntmachung des Hinweises auf die Patenterteilung: **06.08.2025**
(21) Anmeldenummer: 22701643.3
(22) Anmeldetag: 26.01.2022
(51) Int. Cl.: E03D 11/14, F16B 21/08

(54) **MONTAGEVORRICHTUNG FÜR EINEN SANITÄRARTIKEL**
MOUNTING DEVICE FOR A SANITARY ARTICLE
DISPOSITIF DE MONTAGE POUR UN ARTICLE SANITAIRE

(30) Priorität: 08.09.2021 EP 21195466
(43) Veröffentlichungstag der Anmeldung: 17.07.2024
(73) Patentinhaber: Geberit International AG, 8645 Jona (CH)
(72) Erfinder: LECHNER, Manuel, 8722 Kaltbrunn (CH)
(74) Vertreter: Frischknecht, Harry Ralph
(86) Internationale Anmeldenummer: PCT/EP2022/051705
(87) Internationale Veröffentlichungsnummer: WO 2023/036471

(56) Entgegenhaltungen:
- EP-A1- 0 786 562
- EP-A1- 3 369 945
- EP-A2- 1 655 418
- EP-A2- 2 752 526

## Beschreibung

### TECHNISCHES GEBIET

Die vorliegende Erfindung betrifft eine Montagevorrichtung für einen Sanitärartikel nach Anspruch 1.

### STAND DER TECHNIK

Aus den Druckschriften EP 0 786 562 und EP1 260 639 sind Wandhalterungen für ein Montagegestell für Sanitärapparate bekannt geworden. Das Montagegestell wird dabei mit einer Schraube mit der Wandhalterung verbunden. Die Schraube ist über ein Lagerteil, das in einen Hohlraum einer Stütze des Montagegestells eingesetzt ist, am Montagegestell gelagert.

Die Lagerteile werden über Rastelemente im Hohlraum des Montagegestells gelagert. In der Praxis wurde weiter festgestellt, dass die Hohlräume von Stützen masslich stark unterschiedlich sein können. Dies insbesondere bei beschichteten Oberflächen. Aufgrund dieser masslichen Unterschiedlichkeit sind die Lagerteile so ausgebildet, dass diese immer genügend grosses Spiel aufweisen. Das bringt den Vorteil einer einfachen Montage, aber den Nachteil einer Passung, die immer ein Übermass aufweist.

Aus den Druckschriften EP 3 369 945, EP 2 752 526 und EP 1 665 418 sind weitere Montagevorrichtungen für Sanitärartikel bekannt geworden.

### DARSTELLUNG DER ERFINDUNG

Ausgehend von diesem Stand der Technik liegt der Erfindung eine Aufgabe zugrunde, eine Montagevorrichtung für einen Sanitärartikel anzugeben, welche die Nachteile des Standes der Technik überwindet. Insbesondere ist es eine Aufgabe der vorliegenden Erfindung, eine Montagevorrichtung für einen Sanitärartikel anzugeben, welche eine feste Lagerung für eine Schraube bereitstellt. Eine besonders bevorzugte Aufgabe ist es, dass trotz grosser masslicher Toleranz eines Stützenelements, in welcher die Schraube gelagert ist, eine feste Lagerung für eine Schraube bereitgestellt werden kann.

Diese Aufgabe löst der Gegenstand nach Anspruch 1. Demgemäss umfasst eine Montagevorrichtung für die Befestigung von mindestens einem Sanitärartikel, mindestens eine Stütze, eine Schraube und ein Lagerelement, mit welcher die Schraube zur Stütze gelagert ist. Die mindestens eine Stütze umfasst eine Stützenwand, die einen Hohlraum begrenzt, eine erste Öffnung und eine zweite Öffnung. Die Öffnungen sind in der Stützenwand angeordnet und liegen bezüglich des Hohlraums einander gegenüber. Die Öffnungen durchringen dabei die Stützenwand. Die Stütze stellt bei der ersten Öffnung eine erste stützenseitige Anschlagsfläche und bei der zweiten Öffnung eine zweite stützenseitige Anschlagsfläche bereitstellt. Die Schraube weist einen Gewindeabschnitt und einen Schraubenkopf auf. Das Lagerelement weist einen Aufnahmeraum zur Lagerung der Schraube auf. Der Aufnahmeraum erstreckt sich entlang einer Mittelachse. Das Lagerelement weist mindestens eine erste lagerelementseitige Anschlagsfläche auf, welche mit der ersten stützenseitigen Anschlagsfläche im montierten Zustand in Kontakt ist. Weiter weist das Lagerelement mindestens eine zweite lagerelementseitige Anschlagsfläche auf, welche mit der zweiten stützenseitigen Anschlagsfläche im montierten Zustand in Kontakt ist. Die mindestens eine zweite lagerelementseitige Anschlagsfläche ist an mindestens einer Federlasche angeordnet, wobei die mindestens eine Federlasche und die zweite lagerelementseitige Anschlagsfläche derart angeordnet sind, dass das Lagerelement spielfrei zwischen den beiden stützenseitigen Anschlagsflächen geklemmt ist.

Mit anderen Worten gesagt ist das Lagerelement zwischen den beiden stützenseitigen Anschlagsflächen eingeklemmt. Die Anordnung der lagerelementseitigen Anschlagsfläche an einer Federlasche weist den Vorteil auf, dass Fertigungstoleranzen der Stütze kompensiert werden können. Solche Fertigungstoleranzen können dazu führen, dass der Abstand zwischen den beiden stützenseitigen Anschlagsflächen von Stütze zu Stütze variiert.

Weiter wird durch Klemmung des Lagerelements im Hohlraum dem Installateur eine Montagevorrichtung an die Hand gegeben, welche einfacher zu handhaben ist. Insbesondere fällt das Positionieren der Schraube zu einem Wandanker einfacher, weil die Schraube satt bzw. fest in der Stütze gelagert ist.

Vorzugsweise wird die erste stützenseitige Anschlagsfläche durch eine dem Hohlraum zugewandte Wandfläche der Stützenwand bei der ersten Öffnung bereitgestellt. Die zweite stützenseitige Anschlagsfläche wird durch die Kante der zweiten Öffnung und/oder durch eine dem Hohlraum zugewandte Wandfläche der Stützenwand bei der zweiten Öffnung bereitgestellt.

Vorzugsweise sind mehrere der genannten Federlaschen angeordnet. Vorzugsweise sind die Federlaschen in regelmässigen Abständen um den Umfang der Seitenwand verteilt angeordnet.

Vorzugsweise erstreckt sich die Stützenwand im Querschnitt gesehen im Wesentlichen vollständig um die Stützenachse herum. Die Stützenachse verläuft in Längsrichtung mittig durch den Hohlraum.

Die Montagevorrichtung kann in einer bevorzugten Ausführungsform zwei beabstandete Stützen aufweisen, welche mit mindestens einem Querträger oder einer Quertraverse verbunden sind. Vorzugsweise ist bei einer derartigen Ausführungsform der Sanitärartikel am Querträger bzw. der Quertraverse gelagert.

Vorzugsweise ist die zweite lagerelementseitige Anschlagsfläche derart ausgebildet, dass je nach Stellung der Federlasche der Abstand zwischen der ersten lagerelementseitigen Anschlagsfläche und der zweiten lagerelementseitigen Anschlagsfläche unterschiedlich ist.

Hierdurch kann die besagte Klemmung unabhängig von der lichten Weite zwischen den beiden stützenseitigen Anschlagsflächen besonders gut erreicht werden.

Vorzugsweise ist die zweite lagerelementseitige Anschlagsfläche so ausgebildet, dass der Abstand zwischen der ersten lagerelementseitigen Anschlagsfläche und der zweiten lagerelementseitigen Anschlagsfläche bei einer Einfederung gegen die Mittelachse hin, kleiner ist als bei grösserer werdenden Entfernung von der Mittelachse weg.

Vorzugsweise ist die zweite lagerelementseitige Anschlagsfläche mit einer Krümmung gekrümmt ausgebildet, oder dass die zweite lagerelementseitige Anschlagsfläche in Winkel zur Mittelachse gesehen winklig geneigt ausgebildet ist.

Die Krümmung wie auch die winklig geneigte Ausbildung haben den Vorteil, dass eine sehr einfache Struktur zur Toleranzkompensation bzw. zur spielfreien Klemmung geschaffen werden kann.

Vorzugsweise ist die Krümmung um eine Krümmungsachse gekrümmt ausgebildet, wobei die Krümmungsachse beabstandet und quer zur Mittelachse verläuft. Vorzugsweise ist die Krümmung so gewählt, dass wenn die Krümmung an der stützenseitigen Anschlagsfläche anliegt, der Winkel der Tangente am Kontaktpunkt bei allen Stützendimensionen im Wesentlichen gleich ist. Das heisst, dass die zweite lagerelementseitige Anschlagsfläche in jeder Stellung der Federlasche im gleichen Winkel an der stützenseitigen Anschlagsfläche anliegt.

Vorzugsweise weist die zweite lagerelementseitige Anschlagsfläche eine Stufe auf, welche die zweite lagerelementseitige Anschlagsfläche in zwei Flächenabschnitte aufteilt. Die Stufe hat insbesondere den Vorteil, dass das Lagerelement bei unterschiedlichen Stützendimension eingesetzt werden kann. Beispielsweise bei Stützen mit unterschiedlicher Wandstärke.

Vorzugsweise verläuft die mindestens eine Federlasche in einem Winkel α winklig geneigt zur Mittelachse. Vorzugsweise liegt der Winkel α im Bereich von 3° bis 35°.

Die Federlasche verläuft insbesondere im montierten Zustand winklig geneigt zur Mittelachse. Beim Einsetzen des Lagerelements in den beiden Öffnungen und den Hohlraum wird die mindestens eine Federlasche zur Mittelachse hin verschwenkt.

Vorzugsweise weist das Lagerelement weiterhin mindestens eine Rastlasche auf, an welcher eine Rastnocke angeformt ist, wobei die Rastnocke in eine an der Schraube angeordnete Nut eingreift.

Die Rastlasche wird vorzugsweise durch zwei Schlitze gebildet, welche sich in Richtung der Mittelachse durch die unten genannte Seitenwand erstrecken.

Vorzugsweise wird die erste lagerelementseitige Anschlagsfläche durch einen an der unten genannten Seitenwand bzw. an der unten genannten äusseren Seitenwand liegenden Absatz bereitgestellt.

Vorzugsweise erstreckt sich von der ersten Anschlagsfläche ein Führungsabschnitt mit einer zylindrischen Führungsfläche weg. Der Führungsabschnitt ragt dabei in die erste Öffnung hinein.

Vorzugsweise sind die genannten Federlaschen mit der zweiten lagerelementseitigen Anschlagsfläche identisch zueinander ausgebildet sind.

Vorzugsweise weist das Lagerelement mindestens eine weitere Federlasche auf, welche eine weitere Anschlagsfläche aufweist. Die weitere Anschlagsfläche kann mit der zweiten stützenseitigen Anschlagsfläche in Kontakt gebracht werden und kann bei einem mechanischen Versagen des Kontaktes zwischen der zweiten lagerelementseitigen Anschlagsfläche und der zweiten stützenseitigen Anschlagsfläche einen weiteren Anschlag bereitstellen.

Vorzugsweise ist die weitere Anschlagsfläche zu der zweiten lagerelementseitigen Anschlagsfläche in Richtung der Mittelachse versetzt angeordnet und steht insbesondere in einem geringeren Abstand zur ersten lagerelementseitigen Anschlagsfläche als die zweite lagerelementseitige Anschlagsfläche. Im montierten Zustand steht die weitere Anschlagsfläche somit beabstandet zur zweiten stützenseitigen Anschlagsfläche.

Vorzugsweise ist die weitere Anschlagsfläche im Querschnitt durch die Mittelachse gesehen im Wesentlichen rechtwinklig zur Mittelachse orientiert.

Vorzugsweise weist die mindestens eine weitere Federlasche eine Lagerfläche auf, welche sich der Anschlagsfläche anschliesst, wobei die Lagerfläche im montieren Zustand in Kontakt mit der Innenseite der Öffnung ist.

Vorzugsweise sind vier von den genannten weiteren Federlaschen angeordnet, wobei die vier Federlaschen vorzugsweise in gleichmässigem Abstand zueinander angeordnet sind.

Vorzugsweise sind mehrere von den weiteren Federlaschen angeordnet, wobei vorzugsweise zwei einander gegenüberliegende weitere Federlaschen ein erstes Paar bilden und wobei zwei gegenüberliegende weitere Federlaschen ein zweites Paar bilden, wobei die Breite der Federlaschen des ersten Paars gleich der Breite der Federlaschen des zweiten Paars sind, oder wobei die Breite der Federlaschen des ersten Paars ungleich der Breite der Federlaschen des zweiten Paars sind.

Vorzugsweise weisen mindestens zwei der genannten weiteren Federlaschen eine unterschiedliche Breite auf.

Vorzugsweise liegen mindestens eine Federlasche mit der zweiten lagerelementseitigen Anschlagsfläche zwischen zwei der weiteren Federlaschen; insbesondere, dass mindestens zwei Federlaschen zwischen zwei der weiteren Federlaschen liegen.

Vorzugsweise weisen die Federlaschen und die weiteren Federlaschen jeweils eine gleiche Länge auf.

Vorzugsweise sind die weiteren Federlaschen ebenfalls über einen Laschenabschnitt an der Seitenwand angeformt.

Das Lagerelement ist vorzugsweise aus einem Kunststoff, wie Polybutylenterephthalat (PBT) oder Polyamind (PA), hergestellt. Die Stützen sind vorzugsweise aus Stahl und weisen eine rechteckige oder quadratische Querschnittsform auf.

Das Lagerelement kann einstückig oder zweistückig ausgebildet sein.

Wenn das Lagerelement einstückig bereitgestellt wird, wird der Aufnahmeraum durch eine Seitenwand begrenzt.

Vorzugsweise steht die Federlasche über einen ersten Laschenabschnitt, der von der Aussenseite der Seitenwand in einem Winkel winklig geneigt verläuft, mit der Seitenwand in Verbindung.

Vorzugsweise weist die Seitenwand eine Auflagefläche für den Schraubenkopf der Schraube auf, wobei die Auflagefläche von der zweiten lagerelementseitigen Anschlagsfläche her gesehen mit einem Versatz zurückversetzt angeordnet ist, wobei der Versatz derart ist, dass der Schraubenkopf im Wesentlichen vollständig bzw. vollständig zwischen der Auflagefläche und der zweiten lagerelementseitigen Anschlagsfläche zu liegen kommt.

Mit anderen Worten gesagt kommt der Schraubenkopf in den Bereich des Versatzes zu liegen und ist so durch das Lagerelement radial aussenseitig umgeben ist. Der Schraubenkopf steht weiter auf der Seite der zweiten lagerelementseitigen Anschlagsfläche nicht vor, sondern ist im Bereich des Versatzes versenkt angeordnet. Die Federlaschen erstrecken sich von der Seitenwand her gesehen über die Auflagefläche hinweg.

Wenn das mindestens eine Lagerelement zweistückig ausgebildet ist, ist dieses mit einem inneren Lagerelementteil und einem äusseren Lagerelementteil ausgebildet. Das innere Lagerelementteil ist dabei im äusseren Lagerelementteil verschiebbar gelagert. Das innere Lagerelementteil weist dabei den Aufnahmeraum, in welchem die Schraube aufgenommen ist, auf. Das äussere Lagerelementteil weist die mindestens eine erste lagerelementseitige Anschlagsfläche und die mindestens eine zweite lagerelementseitige Anschlagsfläche auf.

Vorzugsweise ist das innere Lagerelementteil relativ zum äusseren Lagerelementteil von einer Ausgangslage in eine Montagelage verschiebbar, wobei das innere Lagerelementteil in der Ausgangslage über eine erste Rastverbindung zum äusseren Lagerelementteil verrastet ist, wobei beim Montagevorgang die erste Rastverbindung aufgehoben wird und das innere Lagerelementteil relativ zum äusseren Lagerelementteil in die Montagelage verschiebbar ist, und wobei in der Montagelage das innere Lagerelementteil mit dem äusseren Lagerelementteil über eine zweite Rastverbindung verrastet.

Vorzugsweise weist das innere Lagerelementteil mindestens eine Fläche auf, welche die mindestens eine Federlasche nach aussen drückt, wenn das innere Lagerelementteil in der Montagelage liegt. Vorzugsweise wird die mindestens eine Federlasche radial nach aussen gedrückt.

Vorzugsweise ist der Aufnahmeraum im inneren Lagerelementteil durch eine Seitenwand begrenzt, wobei die Seitenwand eine Auflagefläche für den Schraubenkopf der Schraube aufweist, wobei die Auflagefläche von der zweiten lagerelementseitigen Anschlagsfläche her gesehen mit einem Versatz zurückversetzt angeordnet ist, wobei der Versatz derart ist, dass der Schraubenkopf im Wesentlichen vollständig bzw. vollständig zwischen der Auflagefläche und der zweiten lagerelementseitigen Anschlagsfläche zu liegen kommt.

Vorzugsweise weist das äussere Lagerelementteil eine äussere Seitenwand auf, von welcher die mindestens eine Federlasche absteht, und dass die erste lagerelementseitige Anschlagsfläche durch einen an der äusseren Seitenwand liegenden Absatz bereitgestellt wird.

Vorzugsweise erstreckt sich die oben genannte weitere Federlasche bei der zweiteiligen Ausführungsform von der äusseren Seitenwand des äusseren Lagerelementteils weg.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Montagevorrichtung nach einer bevorzugten ersten Ausführungsform der vorliegenden Erfindung;
- Fig. 2: eine weitere perspektivische Ansicht der Montagevorrichtung nach Figur 1;
- Fig. 3: eine perspektivische Ansicht der Montagevorrichtung nach Figur 1 mit teilweise eingesetztem Lagerelement und Schraube;
- Fig. 4: eine perspektivische Ansicht von einem Lagerelement mit eingesetzter Schraube zum Einsatz in die Montagevorrichtung nach einer der vorhergehenden Figuren;
- Fig. 5: eine perspektivische Ansicht von einem Lagerelement zum Einsatz in die Montagevorrichtung nach einer der vorhergehenden Figuren;
- Fig. 6: eine Schnittdarstellung durch die Montagevorrichtung nach den vorhergehenden Figuren;
- Fig. 7: eine weitere Schnittdarstellung durch die Montagevorrichtung nach den vorhergehenden Figuren; und
- Fig. 8: eine weitere Schnittdarstellung durch die Montagevorrichtung nach den vorhergehenden Figuren;
- Fig. 9: eine perspektivische Ansicht einer Montagevorrichtung nach einer bevorzugten zweiten Ausführungsform der vorliegenden Erfindung;
- Fig. 10: eine weitere perspektivische Ansicht der Montagevorrichtung nach Figur 2;
- Fig. 11a/b: Detailansichten der Montagevorrichtung nach den Figuren 9 und 10;
- Fig. 12a/b/c: Schnittdarstellungen der Montagevorrichtung nach den Figuren 9 bis 11 in einer Ausgangslage; und
- Fig. 13a/b/c: Schnittdarstellungen der Montagevorrichtung nach den Figuren 9 bis 11 in einer Montagelage.

### BESCHREIBUNG BEVORZUGTER AUSFÜHRUNGSFORMEN

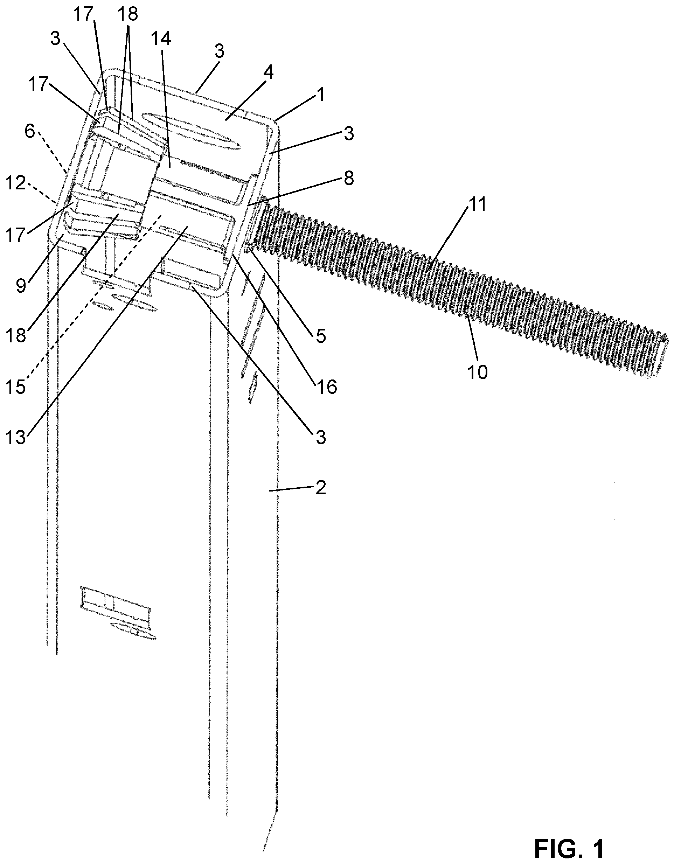

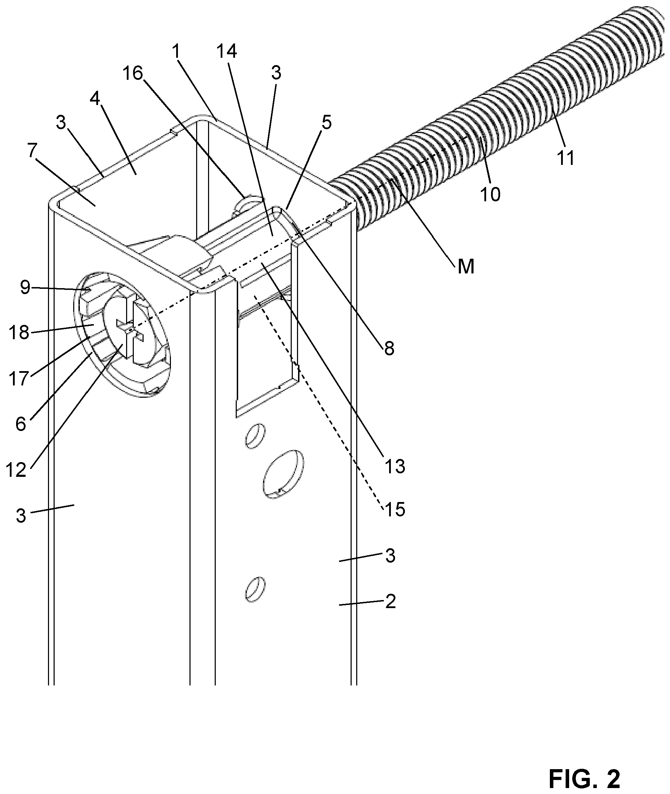

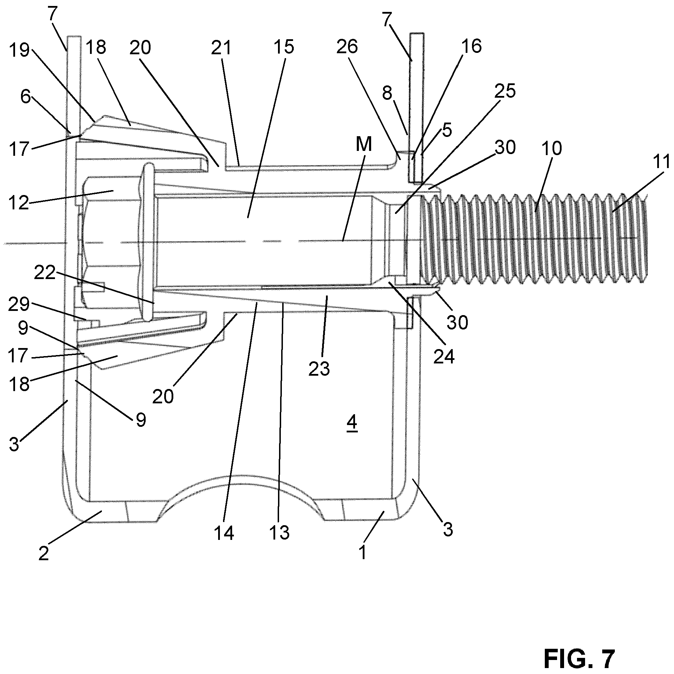

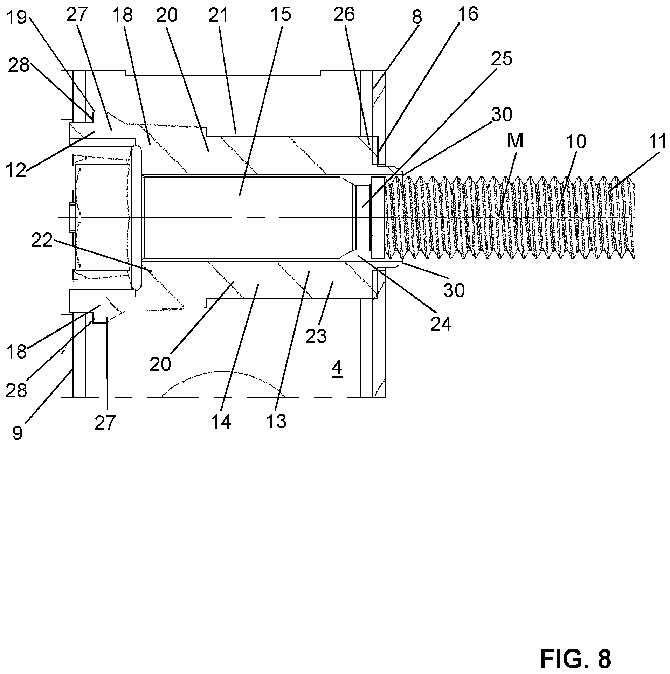

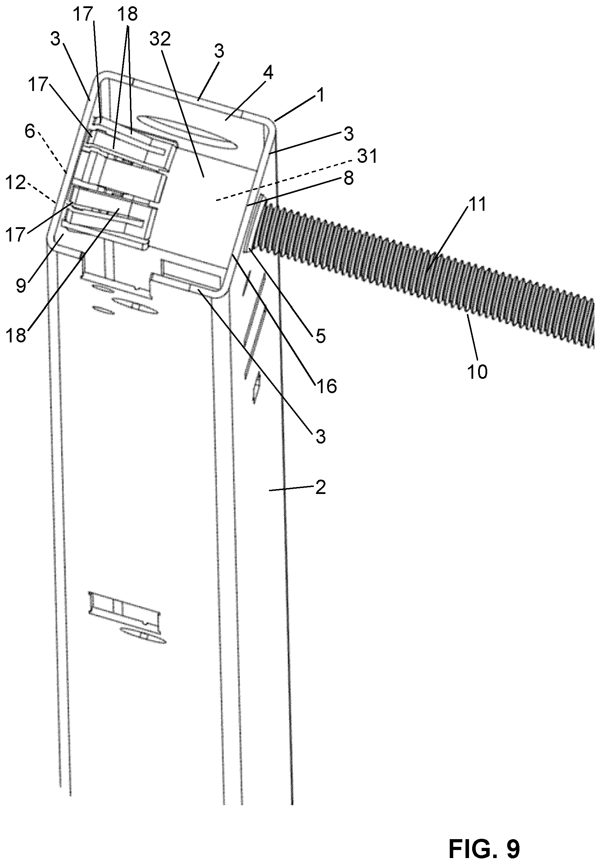

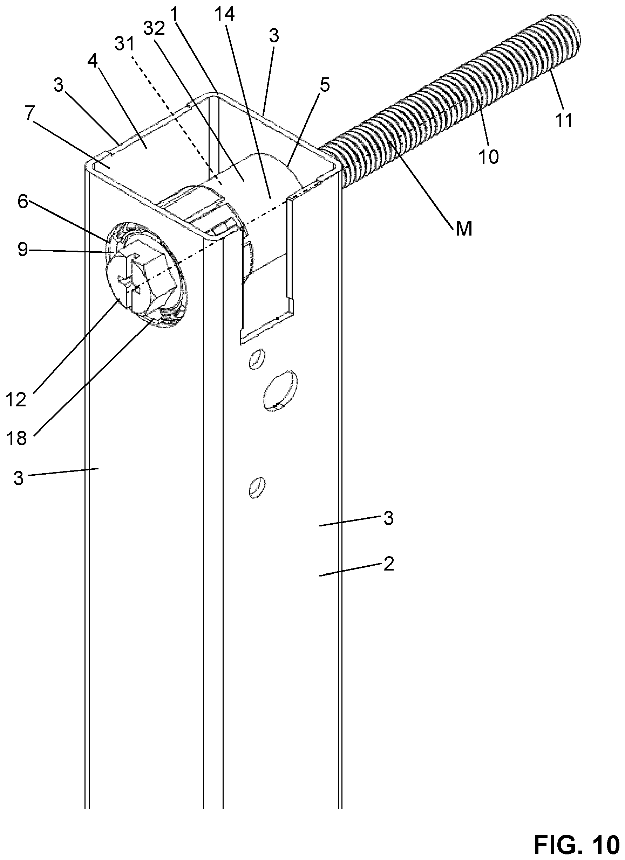

In den Figuren wird eine Montagevorrichtung 1 für die Befestigung von mindestens einem Sanitärartikel ausschnittsweise bzw. in Teilen gezeigt. Der Sanitärartikel ist beispielsweise ein Waschtisch, eine Toilettenschüssel, ein Urinal, ein Spülkasten, etc. In den Figuren 1 bis 8 wird eine erste Ausführungsform und in den Figuren 9 bis 13c wird eine zweite Ausführungsform der vorliegenden Erfindung gezeigt. Gleiche Teile sind dabei mit gleichen Bezugszeichen versehen.

Die Montagevorrichtung 1 umfasst mindestens eine Stütze 2, mindestens eine Schraube 10 und mindestens ein Lagerelement 13, über welches die Schraube 10 in der Stütze 2 gelagert ist. Die Stütze 2 kann mit mindestens einer Traverse mit einer weiteren Stütze 2 in Verbindung stehen. Die Stütze 2 bzw. die mindestens eine Traverse können Befestigungspunkte zur Befestigung des mindestens einen Sanitärartikels aufweisen. Pro Stütze 2 kann ein Lagerelement 13 und somit eine Schraube 10 angeordnet sein. Es ist aber auch denkbar, dass pro Stütze 2 mehrere Lagerelemente 13 und somit mehrere Schrauben 10 angeordnet sind.

Die Stütze 2 weist eine Stützenwand 3 auf. Die Stützenwand 3 begrenzt einen Hohlraum 4. Eine erste Öffnung 5 und eine zweite Öffnung 6 erstrecken sich durch die Stützenwand 3. Die erste Öffnung 5 ist bezüglich des Hohlraums 4 gegenüber der zweiten Öffnung 6 angeordnet. Die dem Hohlraum 4 zugewandte Wandfläche 7 der Stützenwand 3 bei der ersten Öffnung 5 stellt eine erste stützenseitige Anschlagsfläche 8 bereit. Die dem Hohlraum 4 zugewandte Wandfläche 7 der Stützenwand 3 bei der zweiten Öffnung 6 und/oder die Kante der zweiten Öffnung 6 zum Hohlraum hin stellen eine zweite stützenseitige Anschlagsfläche 9 bereit. An diesen Anschlagsflächen 8, 9 kann das Lageelement 13 im eingebauten Zustand anschlagen.

Die Schraube 10 umfasst einen Gewindeabschnitt 11 und einen Schraubenkopf 12. Der Gewindeabschnitt 11 greift in ein an einer Tragstruktur befestigtes Ankerelement, welches in den Figuren nicht gezeigt ist, ein und wird so zur Tragstruktur gesichert.

In der ersten Ausführungsform ist das Lagerelement 13 einstückig ausgebildet. In der zweiten Ausführungsform ist das Lagerelement 13 mehrteilig mit einem inneren Lagerelementteil 31 und einem äusseren Lagerelementteil 32 ausgebildet. Das Lagerelement 13 weist einen Aufnahmeraum 15. Im Aufnahmeraum 15 ist die Schraube 10 gelagert. Das Lagerelement 13 weist mindestens eine erste lagerelementseitige Anschlagsfläche 16 auf. Die erste lagerelementseitige Anschlagsfläche 16 ist im montierten Zustand, d.h. wenn das Lagerelement 13 mit der Stütze 2 in Verbindung steht, in Kontakt mit der ersten stützenseitigen Anschlagsfläche 9. Weiter weist das Lagerelement 13 mindestens eine zweite lagerelementseitige Anschlagsfläche 17 auf. Die zweite lagerelementseitige Anschlagsfläche 17 ist im montierten Zustand in Kontakt mit der zweiten stützenseitigen Anschlagsfläche 9.

Die mindestens eine zweite lagerelementseitige Anschlagsfläche 17 ist an mindestens einer Federlasche 18 angeordnet. Die mindestens eine Federlasche 18 und die zweite lagerelementseitige Anschlagsfläche 17 sind derart angeordnet, dass das Lagerelement 13 spielfrei zwischen den beiden stützenseitigen Anschlagsflächen 8, 9 geklemmt ist. Durch die Elastizität der Federlasche 18 kann die besagte Klemmwirkung erreicht werden.

Mit anderen Worten gesagt wird das Lagerelement 13 zwischen den beiden stützenseitigen Anschlagsflächen 8, 9 eingeklemmt. Die Federlasche 18, an welche die Anschlagsfläche 17 angeordnet ist, erlaubt dabei eine Kompensation der Masstoleranzen des Hohlraums bzw. des Abstandes zwischen den beiden Anschlagsflächen 8, 9.

In den Figuren 1 und 2 sowie 9 und 10 werden perspektivische Teilansichten der Montagevorrichtung 1 gezeigt. In diesen Figuren wird ersichtlich, wie die Anschlagsflächen gemäss obiger Beschreibung aneinander anschlagen. In der montierten Position ist das Lagerelement 13 im wesentlich vollständig in der Stütze 2 gelagert. Das Lagerelement 13 erstreckt sich dabei von der ersten Öffnung 5 zur zweiten Öffnung 6 quer durch den Hohlraum 5. Weiter erstreckt sich die Schraube 10 durch den Aufnahmeraum 15 und ragt mit dem Gewindeabschnitt 11 aus der ersten Öffnung 5 heraus. Der Schraubenkopf 12 ist von der zweiten Öffnung 6 her zugänglich. Die Schraube 10 ist axial fest und drehbar im Aufnahmeraum 15 gelagert.

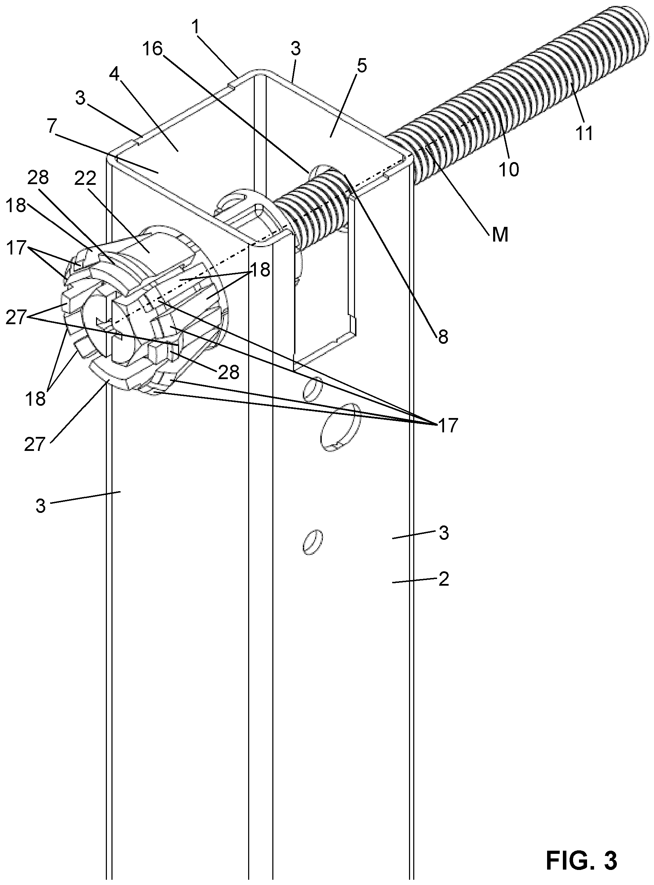

In der Figur 3 wird eine perspektivische Ansicht der Montagevorrichtung 1 gezeigt, wobei das Lagerelement 13 und die Schraube 10 noch nicht vollständig im montierten Zustand sind.

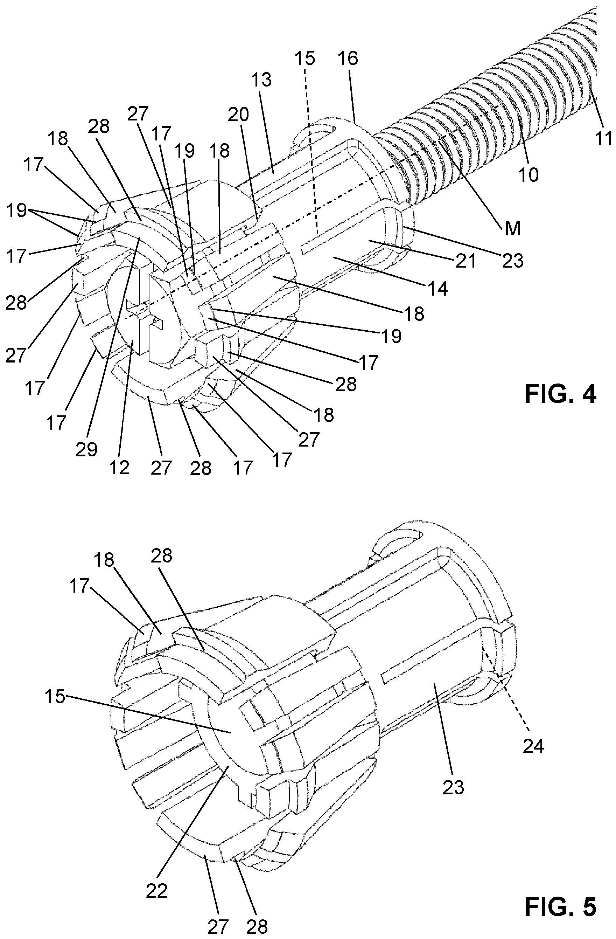

In den Figuren 4 und 5 werden Detailansichten vom Lagerelement 13 und der Schraube 10 bzw. vom Lagerelement 13 in Alleinstellung gezeigt.

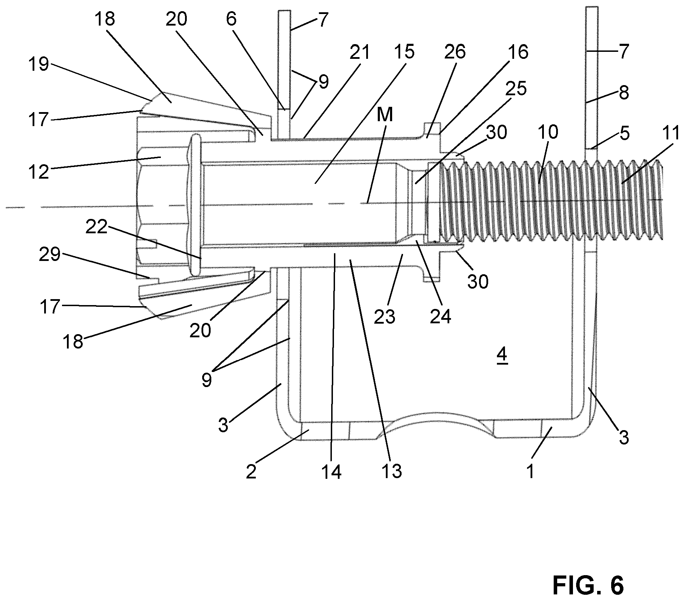

Die Figuren 6 bis 8 zeigen Draufsichten von der Montagevorrichtung 1.

Anhand aller Figuren werden nun weitere bevorzugte Merkmale der Montagevorrichtung 1 genauer erläutert.

Die zweite lagerelementseitige Anschlagsfläche 17 ist derart ausgebildet, dass je nach Stellung der Federlasche 18 der Abstand zwischen der ersten lagerelementseitigen Anschlagsfläche 16 und der zweiten lagerelementseitigen Anschlagsfläche 17 unterschiedlich ist. Hierdurch wird sichergestellt, dass die beiden lagerelementseitigen Anschlagsflächen 16, 17 unabhängig von der masslichen Toleranzabweichung der Stützen 2 in Kontakt mit den korrespondierenden Anschlagsflächen 8, 9 auf Seiten der Stütze 2 sind.

In der gezeigten Ausführungsform ist die zweite lagerelementseitige Anschlagsfläche 17 mit einer Krümmung gekrümmt ausgebildet. Die Krümmung erstreckt sich dabei um eine Krümmungsachse, welche rechtwinklig und beanstandet zur Mittelachse M orientiert ist. Weiter weist die zweite lagerelementseitige Anschlagsfläche 17 eine Stufe 19 auf, welche die zweite lagerelementseitige Anschlagsfläche 17 in zwei Flächenabschnitte aufteilt.

Die mindestens eine Federlasche 18 verläuft in der gezeigten Ausführungsform in einem Winkel α winklig geneigt zur Mittelachse M. Bei der Montage des Lagerelements 13 federt die Federlasche 18 zur Mittelachse M hin ein und geht dann aufgrund der federnden Eigenschaften von einer eingefederten Lage wieder in Richtung der Ausgangslage zurück. Bei dieser Bewegung kommt die zweite lagerelementseitige Anschlagsfläche 17 in Kontakt mit der zweiten stützenseitigen Anschlagsfläche 9.

In der gezeigten Ausführungsform sind mehrere Federlaschen 18 angeordnet. Die Federlaschen 18 sind dabei identisch zueinander ausgebildet. Die Federlaschen 18 sind um den Umfang einer Seitenwand 14 des Lagerelements 11 verteilt angeordnet. Die Federlaschen 18 stehen über einen Laschenabschnitt 20, der von der Aussenseite 21 der Seitenwand 14 in einem Winkel winklig geneigt verläuft, mit der Seitenwand 14 in Verbindung. Der Laschenabschnitt 20 verläuft hier im Wesentlichen rechtwinklig zur Mittelachse M und
Das Lagerelement 13 weist mindestens eine weitere Federlasche 27 auf, welche zusätzlich zur mindestens einen Federlasche 18 mit der zweiten lagerelementseitigen Anschlagsfläche 17 angeordnet ist. Diese weitere Federlasche 27 wird in den Figuren 4, 5 und 8 gezeigt. Die weitere Federlasche 27 weist eine weitere Anschlagsfläche 28 auf. Die weitere Anschlagsfläche 28 ist zu der zweiten lagerelementseitigen Anschlagsfläche 17 in Richtung der Mittelachse M versetzt angeordnet. Insbesondere steht die weitere Anschlagsfläche 28 in einem geringeren Abstand zur ersten lagerelementseitigen Anschlagsfläche 16 als die zweite lagerelementseitige Anschlagsfläche 16. Die mindestens eine weitere Federlasche 27 weist weiter eine Lagerfläche 29 auf, welche sich der Anschlagsfläche 28 anschliesst, wobei die Lagerfläche im montieren Zustand in Kontakt mit der Innenseite der zweiten Öffnung 6 ist.

In der gezeigten Ausführungsform erstreckt sich gegenüber der Federlasche 18 ein Führungsabschnitt 30 von der Seitenwand 14 weg. Der Führungsabschnitt 30 schliesst sich der ersten lagerelementseitigen Anschlagsfläche 16 an. Der Führungsabschnitt 30 kommt dabei in Kontakt mit der Innenfläche der ersten Öffnung 5. Der Führungsabschnitt 30 weist dabei eine zylindrische Form auf. Vom Führungsabschnitt 30 erstreckt sich ein Absatz 26, welche die erste lagerelementseitige Anschlagsfläche 16 bereitstellt.

Weiter weist die Seitenwand 14 gegenüber der Lagerfläche 29 eine Auflagefläche 22 für den Schraubenkopf 12 der Schraube 10 auf. Die Auflagefläche 22 ist dabei von der zweiten lagerelementseitigen Anschlagsfläche 17 her gesehen mit einem Versatz zurückversetzt angeordnet. Durch diesen Versatz wird ein Raum geschaffen, in welchen der Schraubenkopf 12 zu liegen kommt. Vorzugsweise ist der Versatz derart, dass der Schraubenkopf 12 im Wesentlichen vollständig bzw. vollständig zwischen der Auflagefläche 22 und der zweiten lagerelementseitigen Anschlagsfläche 17 zu liegen kommt. D.h., der Schraubenkopf 12 liegt im Wesentlichen vollständig im besagten Raum.

Weiter weist das Lagerelement 13 eine Rastlasche 23 auf, welcher eine Rastnocke 24 angeformt ist. Die Rastnocke 24 greift in eine an der Schraube 10 angeordnete Nut 25 ein. Über die Verbindung zwischen Rastnocke 24 und Nut 25 wird die Schraube 10 axial im Aufnahmeraum 15 gesichert. Die Schraube 10 ist dabei entsprechend drehbar Aufnahmeraum 15 angeordnet.

In der gezeigten Ausführungsform sind vier von den genannten weiteren Federlaschen 27 angeordnet, wobei die vier Federlaschen 27 in vorzugsweise gleichmässigem Abstand zueinander angeordnet sind. Zwei einander gegenüberliegende weitere Federlaschen 27 bilden erstes Paar und zwei gegenüberliegende weitere Federlaschen 27 bilden ein zweites Paar. Die Breite der Federlaschen 27 des ersten Paars ist ungleich der Breite der Federlaschen 27 des anderen Paars.

In der gezeigten Ausführungsform liegen mindestens eine Federlasche 18 mit der zweiten lagerelementseitigen Anschlagsfläche 17 zwischen zwei der weiteren Federlaschen 27. Hier liegen zwei Federlaschen 17 zwischen zwei der weiteren Federlaschen 27.

Nach der ersten Ausführungsform gemäss den Figuren 1 bis 8 ist das Lagerelement 11 einstückig ausgebildet. Dabei weist das Lagerelement eine sich um eine Mittelachse M herum erstreckende Seitenwand 14 auf. Die Seitenwand 14 begrenzt dabei den Aufnahmeraum 15.

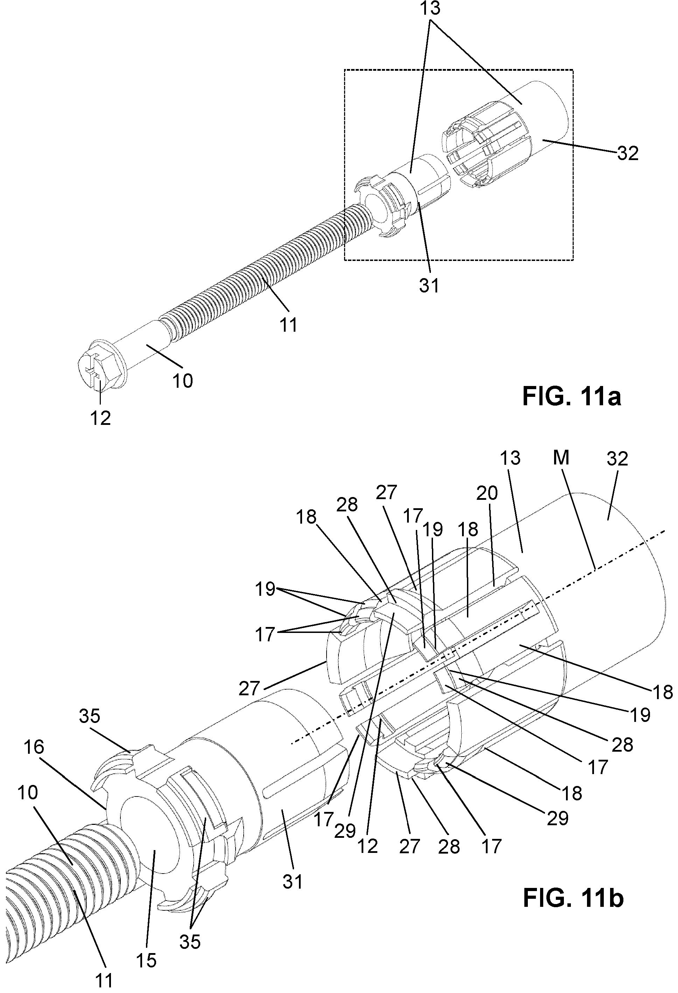

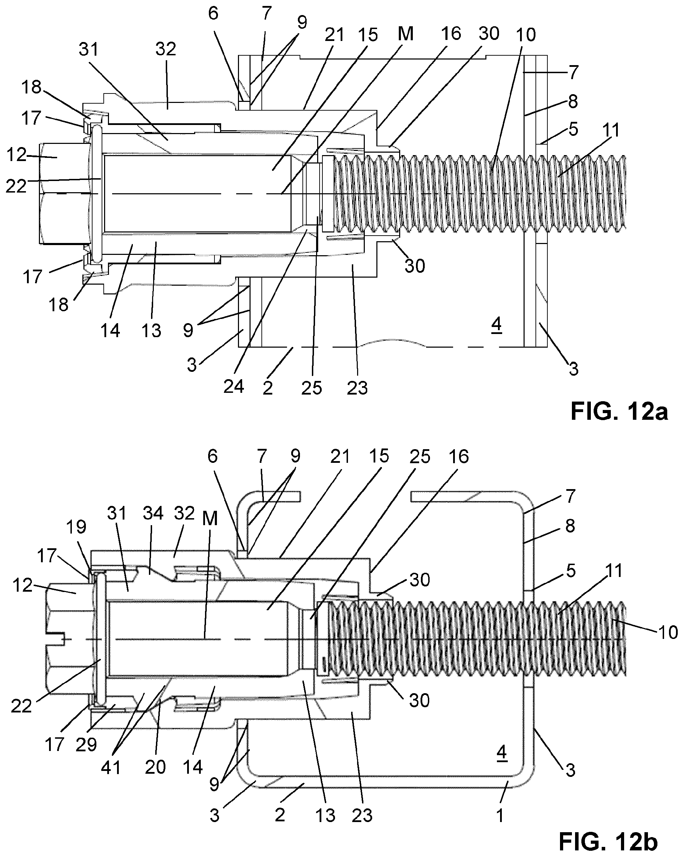

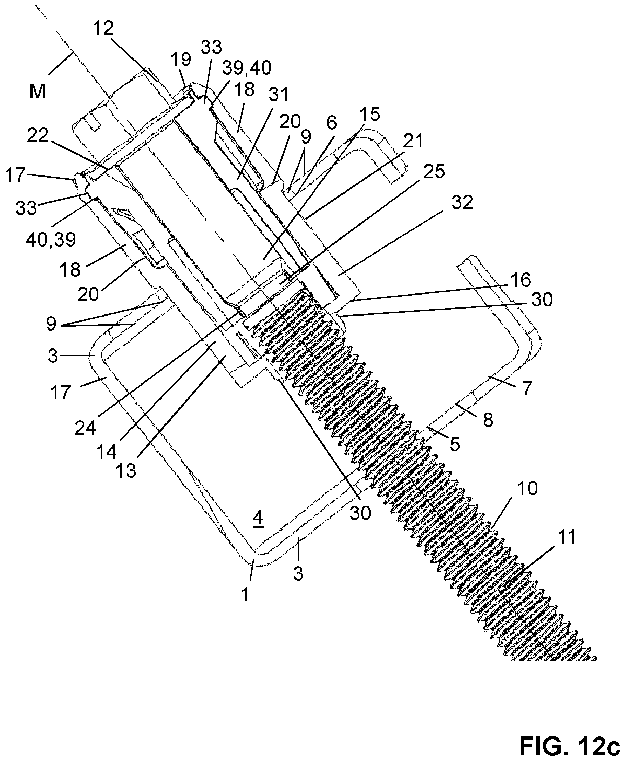

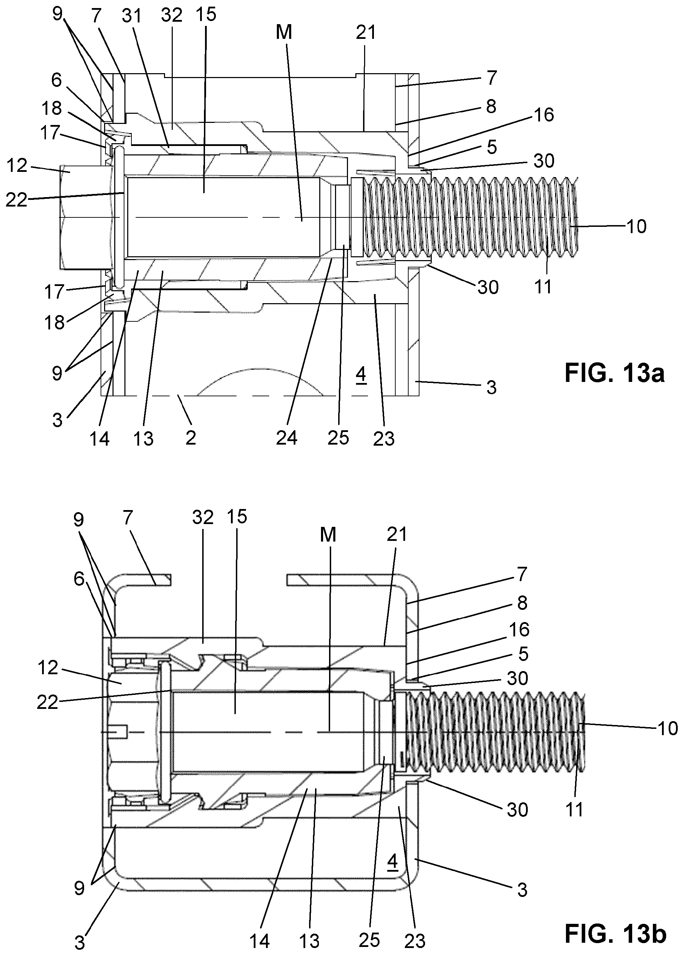

Nach der zweiten Ausführungsform ist das Lagerelement 13 zweiteilig ausgebildet. Das Lagerelement 13 umfasst dabei ein inneres Lagerelementteil 31 und ein äusseres Lagerelementteil 32. Die beiden Lagerelementteile 31 und 32 werden in den Figuren 11a und 11b genauer dargestellt. Die Figuren 12a bis 12c und 13a bis 13c zeigen Schnittdarstellungen. Das innere Lagerelementteil 31 ist im äusseren Lagerelementteil 32 verschiebbar gelagert.

Das innere Lagerelementteil 31 weist dabei den Aufnahmeraum 15 auf, in welchem die Schraube 10 gelagert ist. Das äussere Lagerelementteil 32 weist die mindestens eine erste lagerelementseitige Anschlagsfläche 16 und die mindestens eine zweite lagerelementseitige Anschlagsfläche 17 auf.

Das innere Lagerelementteil 31 ist von einer Ausgangslage in eine Montagelage verschiebbar. Das innere Lagerelementteil 31 ist in der Ausgangslage über eine erste Rastverbindung 33 zum äusseren Lagerelementteil 32 verrastet. Die erste Rastverbindung wird durch eine Rastnocke 39 und durch eine Rastausnehmung 40, in welche die Rastnocke 39 eingreift, bereitgestellt.

Beim Montagevorgang wird die erste Rastverbindung 32 aufgehoben und das innere Lagerelementteil 31 wird relativ zum äusseren Lagerelementteil 32 in die Montagelage verschoben.

In der Montagelage wird das innere Lagerelementteil 31 mit dem äusseren Lagerelementteil 32 über eine zweite Rastverbindung 34 verrastet. Die zweite Rastverbindung 34 wird, wie in den Figuren 13a bis 13c gezeigt, durch zwei gegengleich angeordnete Rastnasen 41 bereitgestellt.

Der Aufnahmeraum 15 im inneren Lagerelementteil 31 ist durch eine Seitenwand 14 begrenzt. Die Seitenwand 14 weist eine Auflagefläche 22 für den Schraubenkopf 12 der Schraube 10 auf. Die Auflagefläche 22 ist von der zweiten lagerelementseitigen Anschlagsfläche 17 her gesehen mit einem Versatz zurückversetzt angeordnet, wobei der Versatz derart ist, dass der Schraubenkopf 12 im Wesentlichen vollständig bzw. vollständig zwischen der Auflagefläche 22 und der zweiten lagerelementseitigen Anschlagsfläche 17 zu liegen kommt. Gegenüber der Auflagefläche 22 weist das innere Lagerelementteil 31 eine Lagerfläche 36 auf. Die Lagerfläche 36 steht, wenn das innere Lagerelementteil 31 in der Montagelage ist, an einer korrespondierenden Lagerfläche 37 an am äusseren Lagerelementteil 32 an

Ferner weist das äussere Lagerelementteil 32 eine äussere Seitenwand 38 auf. Von der äusseren Seitenwand steht die mindestens eine Federlasche 18 ab. In der gezeigten Ausführungsform ist auch die optionale mindestens eine weitere Federlasche 27 mit der weiteren Anschlagsfläche 28 an der äusseren Seitenwand abstehend angeordnet. Die erste lagerelementseitige Anschlagsfläche 16 wird durch einen an der äusseren Seitenwand 14 liegenden Absatz 26 bereitgestellt. Ferner umfasst die äussere Seitenwand 38 auch die erste lagerelementseitige Anschlagsfläche 16.

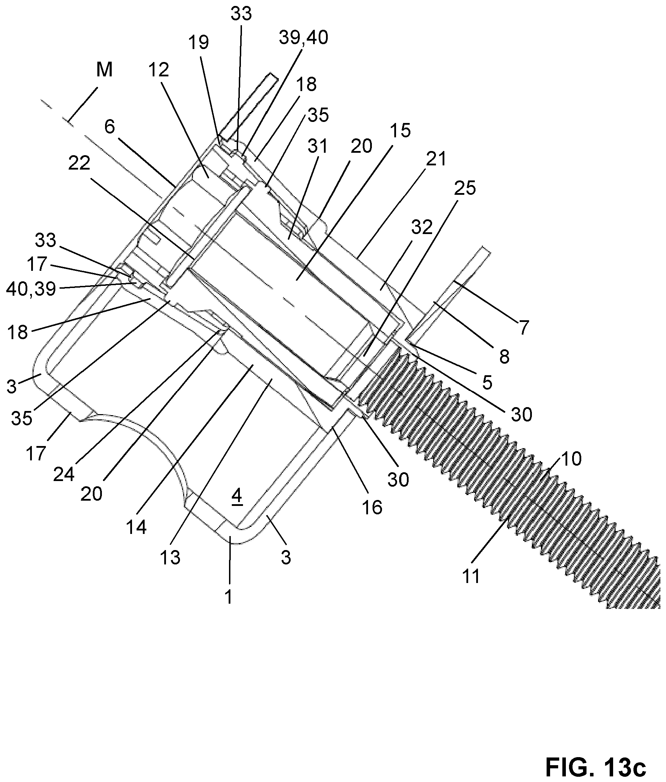

In der bevorzugten Ausführungsform weist das innere Lagerelementteil 32 mindestens eine Fläche 35 auf, welche die mindestens eine Federlasche 18 radial nach aussen drückt, wenn das innere Lagerelementteil 32 in der Montagelage liegt. Wird das innere Lagerelementteil 32 in die Ausgangslage verschoben, so kommt die Fläche 35 in einen Bereich zu liegen, wo die mindestens eine Federlasche 18 nicht weiter blockiert wird. Die Fläche 35 wird in der Figur 13c gezeigt. Hier ist die Fläche 35 ein Teil der Rastnocke 39. Sofern die weitere Federlasche 27 vorhanden ist, ist es auch denkbar, dass eine weitere Fläche 35 auf die weitere Federlasche 27 wirkt.

Wie in der ersten Ausführungsform wird die Schraube 10 ebenfalls über eine Rastnocke 24 im Aufnahmeraum gehalten.

Bei der Demontage der Montagevorrichtung nach der zweiten Ausführungsform ist das innere Lagerelementteil 32 von der Montagelage in die Ausgangslage zu bewegen.

Vorzugsweise ist das innere Lagerelementteil 31 drehfest und axial verschiebbar im äusseren Lagerelementteil 32 gelagert.

**BEZUGSZEICHENLISTE**

| | | | |
|---|---|---|---|
| 1 | Montagevorrichtung | 30 | Führungsabschnitt |
| 2 | Stütze | 31 | inneres Lagerelementteil |
| 3 | Stützenwand | 32 | äusseres Lagerelementteil |
| 4 | Hohlraum | 33 | erste Rastverbindung |
| 5 | Öffnung | 34 | zweite Rastverbindung |
| 6 | Öffnung | 35 | Fläche |
| 7 | Wandfläche | 36 | Lagerfläche |
| 8 | erste stützenseitige Anschlagsfläche | 37 | korrespondierende Lagerfläche |
| 9 | zweite stützenseitige Anschlagsfläche | 38 | äussere Seitenwand |
| | | 39 | Rastnocke |
| 10 | Schraube | 40 | Rastausnehmung |
| 11 | Gewindeabschnitt | 41 | Rastnasen |
| 12 | Schraubenkopf | M | Mittelachse |
| 13 | Lagerelement | | |
| 14 | Seitenwand | | |
| 15 | Aufnahmeraum | | |
| 16 | erste lagerelementseitige Anschlagsfläche | | |
| 17 | zweite lagerelementseitige Anschlagsfläche | | |
| 18 | Federlasche | | |
| 19 | Stufe | | |
| 20 | Laschenabschnitt | | |
| 21 | Aussenseite | | |
| 22 | Auflagefläche | | |
| 23 | Rastlasche | | |
| 24 | Rastnocke | | |
| 25 | Nut | | |
| 26 | Absatz | | |
| 27 | weitere Federlasche | | |
| 28 | weitere Anschlagsfläche | | |
| 29 | Lagerfläche | | |

## Patentansprüche

1. Montagevorrichtung (1) für die Befestigung von mindestens einem Sanitärartikel, umfassend
mindestens eine Stütze (2) mit einer Stützenwand (3), die einen Hohlraum (4) begrenzt, eine erste Öffnung (5) und eine zweite Öffnung (6), welche Öffnungen (5, 6) in der Stützenwand (3) angeordnet sind und bezüglich des Hohlraums (4) einander gegenüber liegen, wobei die Stütze (2) bei der ersten Öffnung (5) eine erste stützenseitige Anschlagsfläche (8) und bei der zweiten Öffnung (6) eine zweite stützenseitige Anschlagsfläche (9) bereitstellt,
mindestens eine Schraube (10) mit einem Gewindeabschnitt (11) und einem Schraubenkopf (12), und
mindestens ein Lagerelement (13) mit einem sich entlang einer Mittelachse (M) erstreckenden Aufnahmeraum (15) zur Lagerung der Schraube (10), wobei das Lagerelement (13) mindestens eine erste lagerelementseitige Anschlagsfläche (16) aufweist, welche mit der ersten stützenseitigen Anschlagsfläche (8) im montierten Zustand in Kontakt ist und wobei das Lagerelement (13) mindestens eine zweite lagerelementseitige Anschlagsfläche (17) aufweist, welche mit der zweiten stützenseitigen Anschlagsfläche (9) im montierten Zustand in Kontakt ist,
**dadurch gekennzeichnet, dass** die mindestens eine zweite lagerelementseitige Anschlagsfläche (17) an mindestens einer Federlasche (18) angeordnet ist, wobei die mindestens eine Federlasche (18) und die zweite lagerelementseitige Anschlagsfläche (17) derart angeordnet sind, dass das Lagerelement (13) spielfrei zwischen den beiden stützenseitigen Anschlagsflächen (8, 9) geklemmt ist.

2. Montagevorrichtung (1) nach Anspruch 1, **dadurch gekennzeichnet, dass** die zweite lagerelementseitige Anschlagsfläche (17) derart ausgebildet ist, dass je nach Stellung der Federlasche (18) der Abstand zwischen der ersten lagerelementseitigen Anschlagsfläche (16) und der zweiten lagerelementseitigen Anschlagsfläche (17) unterschiedlich ist.

3. Montagevorrichtung (1) nach Anspruch 1 oder 2, **dadurch gekennzeichnet, dass** die zweite lagerelementseitige Anschlagsfläche (17) mit einer Krümmung gekrümmt ausgebildet ist, oder dass die zweite lagerelementseitige Anschlagsfläche (17) in Winkel zur Mittelachse gesehen winklig geneigt ausgebildet ist.

4. Montagevorrichtung (1) nach einem der vorhergehenden Ansprüche, **dadurch gekennzeichnet, dass** die zweite lagerelementseitige Anschlagsfläche (17) eine Stufe (19) aufweist, welche die zweite lagerelementseitige Anschlagsfläche (17) in zwei Flächenabschnitte aufteilt.

5. Montagevorrichtung (1) nach einem der vorhergehenden Ansprüche, **dadurch gekennzeichnet, dass** die mindestens eine Federlasche (18) in einem Winkel (α) winklig geneigt zur Mittelachse (M) verläuft.

6. Montagevorrichtung (1) nach einem der vorhergehenden Ansprüche, **dadurch gekennzeichnet, dass** das Lagerelement (13) weiterhin eine Rastlasche (23) aufweist, an welcher eine Rastnocke (24) angeformt ist, wobei die Rastnocke (24) in eine an der Schraube (10) angeordnete Nut (25) eingreift.

7. Montagevorrichtung (1) nach einem der vorhergehenden Ansprüche, **dadurch gekennzeichnet, dass** mehrere der genannten mindestens einen Federlaschen (18), welche die zweite lagerelementseitigen Anschlagsfläche (17) aufweisen, angeordnet sind, wobei diese Federlaschen (18) identisch zueinander ausgebildet sind.

8. Montagevorrichtung (1) nach einem der Ansprüche 1- 6, **dadurch gekennzeichnet, dass** das Lagerelement (13) mindestens eine weitere Federlasche (27) aufweist, welche eine weitere Anschlagsfläche (28) aufweist.

9. Montagevorrichtung (1) nach Anspruch 8, **dadurch gekennzeichnet, dass** die weitere Anschlagsfläche (28) zu der zweiten lagerelementseitigen Anschlagsfläche (17) in Richtung der Mittelachse (M) versetzt angeordnet ist und insbesondere in einem geringeren Abstand zur ersten lagerelementseitigen Anschlagsfläche (16) steht als die zweite lagerelementseitige Anschlagsfläche (17).

10. Montagevorrichtung (1) nach Anspruch 8 oder 9, **dadurch gekennzeichnet, dass** die mindestens eine weitere Federlasche (27) eine Lagerfläche (29) aufweist, welche sich der Anschlagsfläche anschliesst, wobei die Lagerfläche im montieren Zustand in Kontakt mit der Innenseite der zweiten Öffnung (5) ist.

11. Montagevorrichtung (1) nach einem der vorhergehenden Ansprüche 8 bis 10, **dadurch gekennzeichnet, dass** vier von den genannten weiteren Federlaschen (27) angeordnet sind, wobei die vier Federlaschen (27) in vorzugsweise gleichmässigem Abstand zueinander angeordnet.

12. Montagevorrichtung (1) nach einem der Ansprüche 8 bis 11, **dadurch gekennzeichnet, dass** mehrere von den weiteren Federlaschen (27) angeordnet sind, wobei vorzugsweise zwei einander gegenüberliegende weitere Federlaschen (27) ein erstes Paar bilden und wobei zwei gegenüberliegende weitere Federlaschen (27) ein zweites Paar bilden, wobei die Breite der Federlaschen (27) des ersten Paars gleich der Breite der Federlaschen (27) des anderen Paars sind, oder wobei die Breite der Federlaschen (27) des ersten Paars ungleich der Breite der Federlaschen (27) des anderen Paars sind.

13. Montagevorrichtung (1) nach einem der vorhergehenden Ansprüchen 8 bis 12, **dadurch gekennzeichnet, dass** mindestens eine Federlasche (18) mit der zweiten lagerelementseitigen Anschlagsfläche (17) zwischen zwei der weiteren Federlaschen (27) liegen; insbesondere, dass mindestens zwei Federlaschen (18) zwischen zwei der weiteren Federlaschen (27) liegen.

14. Montagevorrichtung nach einem der vorhergehenden Ansprüche, **dadurch gekennzeichnet, dass** das mindestens eine Lagerelement (13) einstückig ausgebildet ist.

15. Montagevorrichtung (1) nach einem der vorhergehenden Ansprüche, **dadurch gekennzeichnet, dass** der Aufnahmeraum (15) durch eine Seitenwand begrenzt ist.

16. Montagevorrichtung (1) nach Anspruch 15, **dadurch gekennzeichnet,**
**dass** die Federlasche (18) über einen Laschenabschnitt (20), der von der Aussenseite (21) der Seitenwand (14) in einem Winkel winklig geneigt verläuft, mit der Seitenwand (14) in Verbindung steht; und/oder
**dass** die Seitenwand (14) eine Auflagefläche (22) für den Schraubenkopf (12) der Schraube (10) aufweist, wobei die Auflagefläche (22) von der zweiten lagerelementseitigen Anschlagsfläche (17) her gesehen mit einem Versatz zurückversetzt angeordnet ist, wobei der Versatz derart ist, dass der Schraubenkopf (12) im Wesentlichen vollständig bzw. vollständig zwischen der Auflagefläche (22) und der zweiten lagerelementseitigen Anschlagsfläche (17) zu liegen kommt; und/oder
**dass** die erste lagerelementseitige Anschlagsfläche (16) durch einen an der Seitenwand (14) liegenden Absatz (26) bereitgestellt wird.

17. Montagevorrichtung nach einem der vorhergehenden Ansprüche 1 bis 13, **dadurch gekennzeichnet, dass** das mindestens eine Lagerelement (13) zweistückig mit einem inneren Lagerelementteil (31) und einem äusseren Lagerelementteil (32) ausgebildet ist,
wobei das innere Lagerelementteil (31) im äusseren Lagerelementteil (32) verschiebbar gelagert ist,
wobei das innere Lagerelementteil (31) den Aufnahmeraum (15) aufweist und
wobei das äussere Lagerelementteil (32) die mindestens eine erste lagerelementseitige Anschlagsfläche (16) und die mindestens eine zweite lagerelementseitige Anschlagsfläche (17) aufweist.

18. Montagevorrichtung nach Anspruch 17, dass das innere Lagerelementteil (31) von einer Ausgangslage in eine Montagelage verschiebbar ist,
wobei das innere Lagerelementteil (31) in der Ausgangslage über eine erste Rastverbindung (33) zum äusseren Lagerelementteil (32) verrastet ist,
wobei beim Montagevorgang die erste Rastverbindung (33) aufgehoben wird und das innere Lagerelementteil (31) relativ zum äusseren Lagerelementteil (32) in die Montagelage verschiebbar ist,
und wobei in der Montagelage das innere Lagerelementteil (31) mit dem äusseren Lagerelementteil (32) über eine zweite Rastverbindung (34) verrastet.

19. Montagevorrichtung nach einem der Ansprüche 17 oder 18, **dadurch gekennzeichnet, dass** das innere Lagerelementteil (31) mindestens eine Fläche (35) aufweist, welche die mindestens eine Federlasche (18) nach aussen drückt, wenn das innere Lagerelementteil (31) in der Montagelage liegt.

20. Montagevorrichtung nach einem der vorhergehenden Ansprüche 17 bis 19, **dadurch gekennzeichnet, dass** der Aufnahmeraum (15) im inneren Lagerelementteil durch eine Seitenwand begrenzt ist, wobei die Seitenwand (14) eine Auflagefläche (22) für den Schraubenkopf (12) der Schraube (10) aufweist, wobei die Auflagefläche (22) von der zweiten lagerelementseitigen Anschlagsfläche (17) her gesehen mit einem Versatz zurückversetzt angeordnet ist, wobei der Versatz derart ist, dass der Schraubenkopf (12) im Wesentlichen vollständig bzw. vollständig zwischen der Auflagefläche (22) und der zweiten lagerelementseitigen Anschlagsfläche (17) zu liegen kommt.

21. Montagevorrichtung (1) nach Anspruch 20, **dadurch gekennzeichnet,**
**dass** das äussere Lagerelementteil (32) eine äussere Seitenwand aufweist, von welcher die mindestens eine Federlasche (18) absteht, und dass die erste lagerelementseitige Anschlagsfläche (16) durch einen an der äusseren Seitenwand (14) liegenden Absatz (26) bereitgestellt wird.

## Claims

1. Mounting device (1) for fastening at least one sanitary article, comprising
at least one support (2) with a support wall (3), which delimits a cavity (4), a first opening (5) and a second opening (6), these openings (5, 6) being arranged in the support wall (3) and opposing each other with respect to the cavity (4), wherein the support (2) provides a first support-side stop surface (8) at the first opening (5) and a second support-side stop surface (9) at the second opening (6),
at least one screw (10) with a threaded portion (11) and a screw head (12), and
at least one bearing element (13) with a receiving chamber (15), which extends along a center axis (M), for bearing the screw (10), wherein the bearing element (13) has at least one first bearing-element-side stop surface (16) which is in contact with the first support-side stop surface (8) in the mounted state, and wherein the bearing element (13) has at least one second bearing-element-side stop surface (17), which is in contact with the second support-side stop surface (9) in the mounted state,
**characterized in that** the at least one second bearing-element-side stop surface (17) is arranged on at least one resilient tab (18), wherein the at least one resilient tab (18) and the second bearing-element-side stop surface (17) are arranged in such a way that the bearing element (13) is clamped with zero clearance between the two support-side stop surfaces (8, 9).

2. Mounting device (1) as claimed in claim 1, **characterized in that** the second bearing-element-side stop surface (17) is configured in such a way that the distance between the first bearing-element-side stop surface (16) and the second bearing-element-side stop surface (17) varies depending on the position of the resilient tab (18).

3. Mounting device (1) as claimed in claim 1 or 2, **characterized in that** the second bearing-element-side stop surface (17) is configured so as to be curved with a curve, or **in that** the second bearing-element-side stop surface (17) is configured so as to be inclined in an angled manner at an angle, as viewed relative to the center axis.

4. Mounting device (1) as claimed in any one of the preceding claims, **characterized in that** the second bearing-element-side stop surface (17) has a step (19) which divides the second bearing-element-side stop surface (17) into two surface portions.

5. Mounting device (1) as claimed in any one of the preceding claims, **characterized in that** the at least one resilient tab (18) extends so as to be inclined in an angled manner at an angle (α) to the center axis (M).

6. Mounting device (1) as claimed in any one of the preceding claims, **characterized in that** the bearing element (13) further has a locking tab (23) on which a locking cam (24) is integrally formed, wherein the locking cam (24) engages in a groove (25) arranged on the screw (10).

7. Mounting device (1) as claimed in any one of the preceding claims, **characterized in that** several of said at least one resilient tab (18) which have the second bearing-element-side stop surface (17) are arranged, wherein said resilient tabs (18) are configured so as to be identical to one another.

8. Mounting device (1) as claimed in any one of the preceding claims 1 to 6, **characterized in that** the bearing element (13) has at least one further resilient tab (27), which has a further stop surface (28).

9. Mounting device (1) as claimed in claim 8, **characterized in that** the further stop surface (28) is arranged so as to be offset relative to the second bearing-element-side stop surface (17) in the direction of the center axis (M) and is located in particular closer to the first bearing-element-side stop surface (16) than the second bearing-element-side stop surface (17).

10. Mounting device (1) as claimed in claim 8 or 9, **characterized in that** the at least one further resilient tab (27) has a bearing surface (29) adjoining the stop surface, wherein the bearing surface is in contact with the interior of the second opening (5) in the mounted state.

11. Mounting device (1) as claimed in any one of the preceding claims 8 to 10, **characterized in that** four of the above-mentioned further resilient tabs (27) are arranged, wherein the four resilient tabs (27) are arranged at a preferably uniform distance from one another.

12. Mounting device (1) as claimed in any one of claims 8 to 11, **characterized in that** a plurality of the further resilient tabs (27) is arranged, wherein preferably two opposing further resilient tabs (27) form a first pair, and wherein two opposing further resilient tabs (27) form a second pair, wherein the width of the resilient tabs (27) of the first pair is identical to the width of the resilient tabs (27) of the other pair, or wherein the width of the resilient tabs (27) of the first pair is not identical to the width of the resilient tabs (27) of the other pair.

13. Mounting device (1) as claimed in any one of the preceding claims 8 to 12, **characterized in that** at least one resilient tab (18) with the second bearing-element-side stop surface (17) is positioned between two of the further resilient tabs (27); in particular **in that** at least two resilient tabs (18) are positioned between two of the further resilient tabs (27).

14. Mounting device as claimed in any one of the preceding claims, **characterized in that** the at least one bearing element (13) is configured in one piece.

15. Mounting device (1) as claimed in any one of the preceding claims, **characterized in that** the receiving chamber (15) is delimited by a lateral wall.

16. Mounting device (1) as claimed in claim 15, **characterized in that**
the resilient tabs (18) are connected to the lateral wall (14) via a tab portion (20) which extends from the exterior (21) of the lateral wall (14) so as to be inclined in an angled manner at an angle; and/or
**in that** the lateral wall (14) has a contact surface (22) for the screw head (12) of the screw (10), wherein the contact surface (22), as viewed from the second bearing-element-side stop surface (17), is arranged with an offset so as to be offset in a rearward direction, wherein the offset is such that the screw head (12) comes to be positioned substantially completely or completely between the contact surface (22) and the second bearing-element-side stop surface (17); and/or
**in that** the first bearing-element-side stop surface (16) is provided by a shoulder (26) positioned on the lateral wall (14).

17. Mounting device as claimed in any one of the preceding claims 1 to 13, **characterized in that** the at least one bearing element (13) is configured in two pieces, with an inner bearing element part (31) and an outer bearing element part (32),
wherein the inner bearing element part (31) is disposed in the outer bearing element part (32) so as to be displaceable,
wherein the inner bearing element part (31) has the receiving chamber (15) and
wherein the outer bearing element part (32) has the at least one first bearing-element-side stop surface (16) and the at least one second bearing-element-side stop surface (17).

18. Mounting device as claimed in claim 17, **characterized in that** the inner bearing element part (31) is displaceable from an initial position into a mounting position,
wherein, in the initial position, the inner bearing element part (31) is locked to the outer bearing element part (32) via a first locking connection (33),
wherein, during the mounting process, the first locking connection (32) is released and the inner bearing element part (31) is displaceable relative to the outer bearing element part (33) into the mounting position,
and wherein, in the mounting position, the inner bearing element part (31) is locked to the outer bearing element part (32) via a second locking connection (34).

19. Mounting device as claimed in either claim 17 or 18, **characterized in that** the inner bearing element part (31) has at least one surface (35) which presses the at least one resilient tab (18) outward when the inner bearing element part (31) is in the mounting position.

20. Mounting device as claimed in any one of the preceding claims 17 to 19, **characterized in that** the receiving chamber (15) in the inner bearing element part is delimited by a lateral wall, wherein the lateral wall (14) has a contact surface (22) for the screw head (12) of the screw (10), wherein the contact surface (22), as viewed from the second bearing-element-side stop surface (17), is arranged with an offset so as to be offset in a rearward direction, wherein the offset is such that the screw head (12) comes to be positioned substantially completely or completely between the contact surface (22) and the second bearing-element-side stop surface (17).

21. Mounting device (1) as claimed in claim 20, **characterized in that**
the outer bearing element part (32) has an outer lateral wall, from which the at least one resilient tab (18) protrudes, and **in that** the first bearing-element-side stop surface (16) is provided by a shoulder (26) positioned on the outer lateral wall (14).

## Revendications

1. Dispositif de montage (1) pour la fixation d'au moins un article sanitaire, comprenant
au moins un support (2) avec une paroi de support (3) qui délimite une cavité (4), une première ouverture (5) et une deuxième ouverture (6), lesquelles ouvertures (5, 6) sont disposées dans la paroi de support (3) et sont opposées l'une à l'autre par rapport à la cavité (4), le support (2) fournissant une première surface de butée (8) côté support au niveau de la première ouverture (5) et une deuxième surface de butée (9) côté support au niveau de la deuxième ouverture (6),
au moins une vis (10) avec une section filetée (11) et une tête de vis (12), et
au moins un élément de logement(13) avec un espace de réception (15) s'étendant le long d'un axe central (M) pour le logement de la vis (10), l'élément de logement (13) présentant au moins une première surface de butée (16) côté élément de logement, qui est en contact avec la première surface de butée (8) côté support à l'état monté, et l'élément de logement (13) présentant au moins une deuxième surface de butée (17) côté élément de logement qui est en contact avec la deuxième surface de butée (9) côté support à l'état monté,
**caractérisé en ce que** l'au moins une deuxième surface de butée (17) côté élément de logement est disposée sur au moins une languette faisant ressort (18), l'au moins une languette faisant ressort (18) et la deuxième surface de butée (17) côté élément de logement étant disposées de telle sorte que l'élément de logement (13) soit bloqué sans jeu entre les deux surfaces de butée (8, 9) côté support.

2. Dispositif de montage (1) selon la revendication 1, **caractérisé en ce que** la deuxième surface de butée (17) côté élément de logement est conçue de telle sorte que, selon la position de la languette faisant ressort (18), la distance entre la première surface de butée (16) côté élément de logement et la deuxième surface de butée (17) côté élément de logement soit différente.

3. Dispositif de montage (1) selon la revendication 1 ou 2, **caractérisé en ce que** la deuxième surface de butée (17) côté élément de logement est réalisée avec une courbure, ou **en ce que** la deuxième surface de butée (17) côté élément de logement est réalisée de manière inclinée sous un angle par rapport à l'axe central.

4. **Dispositif** de montage (1) selon l'une quelconque des revendications précédentes, **caractérisé en ce que** la deuxième surface de butée (17) côté élément de logement présente un gradin (19) qui divise la deuxième surface de butée (17) côté élément de logement en deux portions de surface.

5. Dispositif de montage (1) selon l'une quelconque des revendications précédentes, **caractérisé en ce que** ladite au moins une languette faisant ressort (18) s'étend selon un angle (α) incliné angulairement par rapport à l'axe central (M).

6. Dispositif de montage (1) selon l'une quelconque des revendications précédentes, **caractérisé en ce que** l'élément de logement (13) comprend en outre une languette d'encliquetage (23) sur laquelle est formée une came d'encliquetage (24), la came d'encliquetage (24) s'engageant dans une rainure (25) disposée sur la vis (10).

7. Dispositif de montage (1) selon l'une quelconque des revendications précédentes, **caractérisé en ce que** plusieurs desdites au moins une languette faisant ressort (18), qui présentent la deuxième surface de butée (17) côté élément de logement, y sont disposées, ces languettes faisant ressort (18) étant identiques entre elles.

8. Dispositif de montage (1) selon l'une des revendications 1 à 6, **caractérisé en ce que** l'élément de logement (13) comporte au moins une autre languette faisant ressort (27) qui présente une autre surface de butée (28).

9. Dispositif de montage (1) selon la revendication 8, **caractérisé en ce que** l'autre surface de butée (28) est décalée par rapport à la deuxième surface de butée (17) côté élément de logement dans la direction de l'axe central (M) et est notamment située à une distance plus petite de la première surface de butée (16) côté élément de logement que la deuxième surface de butée (17) côté élément de logement.

10. Dispositif de montage (1) selon la revendication 8 ou 9, **caractérisé en ce que** l'au moins une autre languette faisant ressort (27) présente une surface d'appui (29) qui se raccorde à la surface de butée, la surface d'appui étant en contact avec le côté intérieur de la deuxième ouverture (5) à l'état monté.

11. Dispositif de montage (1) selon l'une quelconque des revendications précédentes 8 à 10, **caractérisé en ce que** quatre desdites autres languettes faisant ressort (27) y sont disposées, les quatre languettes faisant ressort (27) étant disposées de préférence à une distance égale les unes des autres.

12. Dispositif de montage (1) selon l'une des revendications 8 à 11, **caractérisé en ce que** plusieurs desdites autres languettes faisant ressort (27) y sont disposées, de préférence deux autres languettes faisant ressort (27) opposées formant une première paire et deux autres languettes faisant ressort (27) opposées formant une deuxième paire, la largeur des languettes faisant ressort (27) de la première paire étant égale à la largeur des languettes faisant ressort (27) de l'autre paire, ou la largeur des languettes faisant ressort (27) de la première paire étant différente de la largeur des languettes faisant ressort (27) de l'autre paire.

13. Dispositif de montage (1) selon l'une des revendications précédentes 8 à 12, **caractérisé en ce qu'**au moins une languette faisant ressort (18) avec la deuxième surface de butée (17) côté élément de logement se trouve entre deux des autres languettes faisant ressort (27); en particulier **en ce qu'**au moins deux languettes faisant ressort (18) se trouvent entre deux des autres languettes faisant ressort (27).

14. Dispositif de montage selon l'une quelconque des revendications précédentes, **caractérisé en ce que** l'au moins un élément de logement (13) est réalisé d'une seule pièce.

15. Dispositif de montage (1) selon l'une quelconque des revendications précédentes, **caractérisé en ce que** l'espace de réception (15) est délimité par une paroi latérale.

16. Dispositif de montage (1) selon la revendication 15, **caractérisé**
**en ce que** la languette faisant ressort (18) communique avec la paroi latérale (14) par l'intermédiaire d'une portion de languette (20) qui est inclinée angulairement par rapport à la face extérieure (21) de la paroi latérale (14) ; et/ou
**en ce que** la paroi latérale (14) présente une surface d'appui (22) pour la tête de vis (12) de la vis (10), la surface d'appui (22), vue depuis la deuxième surface de butée (17) côté élément de logement, étant disposée en retrait avec un décalage, le décalage étant tel que la tête de vis (12) vienne se placer sensiblement complètement ou complètement entre la surface d'appui (22) et la deuxième surface de butée (17) côté élément de logement ; et/ou
**en ce que** la première surface de butée (16) côté élément de logement est fournie par un épaulement (26) situé sur la paroi latérale (14).

17. Dispositif de montage selon l'une des revendications précédentes 1 à 13, **caractérisé en ce que** ledit au moins un élément de logement (13) est réalisé en deux pièces avec une partie d'élément de logement intérieure (31) et une partie d'élément de logement extérieure (32),
la partie d'élément de logement intérieure (31) étant logée de manière coulissante dans la partie d'élément de logement extérieure (32),
la partie d'élément de logement intérieure (31) présentant l'espace de réception (15) et
la partie d'élément de logement extérieure (32) présentant l'au moins une première surface de butée (16) côté élément de logement et l'au moins une deuxième surface de butée (17) côté élément de logement.

18. Dispositif de montage selon la revendication 17, la partie d'élément de logement intérieure (31) pouvant être déplacée d'une position initiale à une position de montage,
la partie d'élément de logement intérieure (31) étant encliquetée dans la position initiale par une première liaison par encliquetage (33) avec la partie d'élément de logement extérieure (32),
la première liaison par encliquetage (33) étant supprimée lors du processus de montage et la partie d'élément de logement intérieure (31) pouvant être déplacée par rapport à la partie d'élément de logement extérieure (32) à la position de montage,
et dans la position de montage, la partie d'élément de logement intérieure (31) étant encliquetée avec la partie d'élément de logement extérieure (32) par une deuxième liaison par encliquetage (34).

19. Dispositif de montage selon l'une des revendications 17 ou 18, **caractérisé en ce que** la partie d'élément de logement intérieure (31) présente au moins une surface (35) qui pousse l'au moins une languette faisant ressort (18) vers l'extérieur lorsque la partie d'élément de logement intérieure (31) est dans la position de montage.

20. Dispositif de montage selon l'une des revendications précédentes 17 à 19, **caractérisé en ce que** l'espace de réception (15) dans la partie d'élément de logement intérieure est délimité par une paroi latérale, la paroi latérale (14) présentant une surface d'appui (22) pour la tête de vis (12) de la vis (10), la surface d'appui (22) étant disposée avec un décalage en retrait par rapport à la deuxième surface de butée (17) côté élément de logement, le décalage étant tel que la tête de vis (12) vienne se placer sensiblement complètement ou complètement entre la surface d'appui (22) et la deuxième surface de butée (17) côté élément de logement .

21. Dispositif de montage (1) selon la revendication 20, **caractérisé**
**en ce que** la partie d'élément de logement extérieure (32) présente une paroi latérale extérieure de laquelle fait saillie l'au moins une languette faisant ressort (18), et **en ce que** la première surface de butée (16) côté élément de logement est fournie par un épaulement (26) situé sur la paroi latérale extérieure (14).
